# EUROPEAN PATENT APPLICATION

(11) **EP 2 098 397 A2**
(43) Date of publication of application: **09.09.2009**
(21) Application number: 09152251.6
(22) Date of filing: 16.02.2009
(51) Int. Cl.: B60J 7/06

(54) **Supporting device of a covering tarpaulin for truck top-bodies**

(30) Priority: 05.03.2008 IT TV20080036
(71) Applicant: Marcolin S.r.l., 33170 Pordenone (IT)
(72) Inventor: Amato, Davide, 33080, Fiume Veneto (Pordenone) (IT)

(57) **Abstract**

To support the end section of a covering tarpaulin (40) for truck top-bodies there is arranged a temporary support (32), operative when said tarpaulin is brought in the packed condition toward the cabin shelter, so as to support said tarpaulin in correspondence of its inner surface.

## Description

The present invention relates to non-rigid folding coverings, and more specifically to the so-called covering tarpaulins for truck top-bodies or stationary top-bodies.

They are essentially top-bodies normally uncovered that under certain circumstances and conditions must be covered with a covering foldable tarpaulin made in plastic materials as PVC, mainly to protect the contents of the top-body, or to prevent it from dispersing during the run of the truck or by wind action.

In the description below truck top-bodies will be referred to, it being understood that this is an exemplary but not limiting reference for the scope of the invention, which can find same application in case of stationary top-bodies.

Usually these tarpaulins are supported by transverse centerings sliding along the edge of the top-body. The centerings are dragged into sliding by manually or motor-operated cable dragging devices.

The European patent application No 071 13042.1, filed on July 24, 2007 on behalf of the Applicant, describes a particular device for closing and opening the tarpaulin, meaning by opening the condition in which the tarpaulin and the centerings are packed near the end of the body opposite to the back door, adjacent therefore to the rear wall of the truck driver's cabin, and for closing the condition in which the tarpaulin is extended to cover the entire top-body and the centerings are separated between each other to their maximum possible extent. In practice, under the opening condition the tarpaulin is packed at the so-called cabin shelter.

In the European patent application cited above there are described, illustrated and claimed special connecting means with articulated rods between the bases of adjacent centerings which allow, in particular during the opening of the tarpaulin and thus the grouping or packing of the tarpaulin and the centerings, the guiding of the tarpaulin hems so as to avoid that the same tarpaulin might fall and/or insert between a centering and the other.

Previously, indeed, and again today for the grouping of the centerings and the guiding of the tarpaulin profiles are used in rigid plastic material (e.g. polyethylene), extending across the entire length of the tarpaulin and placed in special side pockets arranged in the tarpaulin.

These plastic profiles, however, are subject in the long term to breaks or deformations thereby the tarpaulin during packing falls between a centering and the other.

Now, when the tarpaulin inserts between a centering and the other in the packed condition, the action of the deformed or broken profile and the localized pressure of the centerings that may arise therefrom can lead to the rupture of the tarpaulin or cause an off-axis placement of the covering, which in turn leads to a greater effort for the driving motor while dragging the tarpaulin toward the above cited closed condition and an abnormal wear of the other components of control devices such as cables, skids and even the same centerings.

The articulated rods device referred to in the European patent application cited above advantageously solves this problem and for more details about its structure that application may be consulted.

In particular, it has the further advantage of the possible replacement of one or more damaged pieces, for example following the fall of weights (rocks, etc.) on the covering, without having to change, as in the case of rigid plastic profiles, the whole profile over the whole length of the tarpaulin.

However, there is still not solved the problem of the tarpaulin end section, in particular as regards the tarpaulin end fixed to the cabin shelter near the truck cabin.

In fact, in this case the articulated rods device above may not be used, because the distance between the top-body front end and the cabin shelter is not fixed, but variable from truck to truck, whereby one should make a specific pair of articulated rods (meant as length and coupling bracket of the tarpaulin for each truck), which is clearly incompatible with a production industrially acceptable.

Therefore, limited to such a section, a rigid plastic profile must still be used, albeit limited in length to the extension of that section, with the drawbacks and problems mentioned above.

The main object of the present invention is to tackle the problem outlined above in an industrially advantageous manner.
A more specific object of the present invention is to remove the drawback outlined above in the known devices without making more complex the command structure for opening and closing the tarpaulin.

This and other objects are achieved with a device for supporting the covering tarpaulin for top-bodies, especially top-bodies of trucks, allowing the phases of opening and closing the tarpaulin as previously identified, characterized by comprising, at the tarpaulin end near the truck cabin, a tarpaulin supporting element, fixed at said top-body end and cooperating with the inner surface of the tarpaulin, and means for urging said supporting element toward the operating position in which it rises substantially vertically from its said fixing point, temporarily supporting the tarpaulin at said end.

In the preferred embodiment of the present invention said supporting element consists of a U-shaped tubular element, in which the transverse side of the U is in contact with said inner surface of the tarpaulin, while the ends of the sides of the U are swivelly anchored to a mounting bracket, preferably anchored to the cabin shelter or at the front end of the top-body, and said means for urging said supporting element toward said condition in which it rises vertically consist of spring means, in particular a torsion spring, also fixed at said bracket and comprises a U-frame cooperating with the sides of said U-shaped element.

Even more preferably, both the U-shaped tubular element forming said supporting element and said U-frame of said torsion spring comprise telescopically coupled elements that allow to adjust both the height of the said U-shaped element and that of said frame of the torsion spring depending on the width of the space separating the last transverse tarpaulin supporting centering from the front end of the top-body.

Specific aspects and benefits of the present invention will appear more clearly from the following description of a preferred embodiment, description made with reference to the drawings in which:
Fig. 1 is a view that shows the solution in Fig. 9 of the European patent application cited above;
fig. 2 and 3 show the device of the present invention respectively in the raised or vertical condition and in the lowered or horizontal one;
fig. 4a, 4b and 4 are views of the components of the device of the present invention and of the device as seen frontally,
Figures 5a, 5b and 5c are views that show the solution of the present invention in its application to the top-body of a truck.

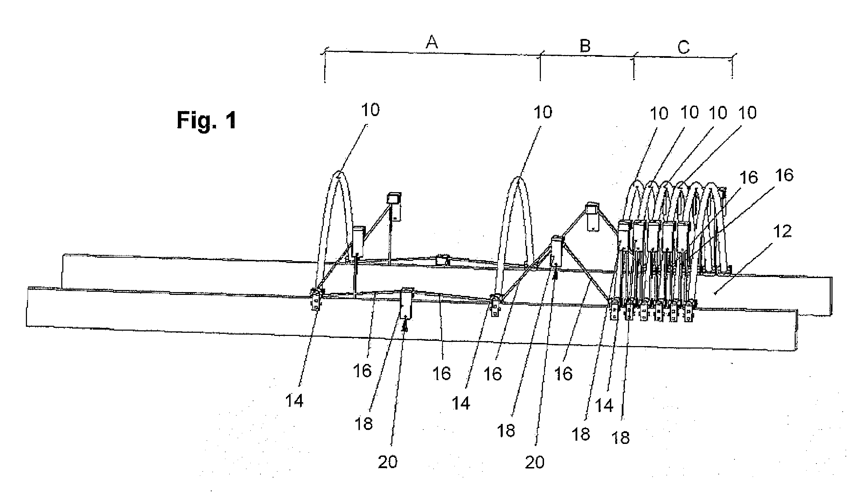

Referring to Fig. 1, there is shown as already indicated the solution of the European patent application above, quoting in the same figure the three conditions of the tarpaulin, i.e. fully extended on the left (A) of the figure, partially packed in the central part (B) and completely packed in right side (C).

The structure comprises a series of centerings 10 adapted to support a tarpaulin not shown, of the type used for coverings of this type, such as in PVC.

The centerings 10 are adapted to slide along sections 12 formed along the edges of the top-body (not shown), by means of block-runners 14 present at the feet ends of the centerings 10.

Each block-runner 14, preferably made of anti-friction material and/or equipped with rolling means for promoting the sliding, is adapted to pivotally connect the ends of two arms 16, one on each side of the runner. In the figure, for clarity, are shown only the arms located on one side of the top-body, but it is clear that between two successive centerings there are four arms 16, two on each side of the top-body.

At the other end each arm 16 is pivoted to a bracket 18, preferably L-shaped, having at its bottom a through-hole 20 or equivalent means for fixing the tarpaulin.

The articulated connection between a pair of brackets 18 on two opposite sides of the top-body, the four arms 16 pivoted to the same and the four block-runners 14 of the two adjacent centerings 10 give rise to a bellows-system on which the tarpaulin is fixed.

When the centerings 10 are brought in the spaced condition along the entire edge 12 (see part A of the figure) the tarpaulin assumes the extended condition and is stretched to cover the top-body, and any accidental lifting of the tarpaulin is prevented, with no need to use additional anchoring means (such as strings or elastic bands).

When, however, the centerings 10 are drawn closer together for packing, passing through the condition shown in B to reach the one shown in part C, the tarpaulin folds thanks also to the direct upward action of the bracket 18 which is raised by the closure of the arms 16.

It is worth noting that the arms 16, even in the opening position, are in every case slightly tilted with respect to the edge 12 of the top-body, whereby any jamming is prevented.

As to the first and the last centering of the structure, they are linked, respectively upstream the first (i.e. towards the back side of the top-body) and downstream the last (i.e. towards the cabin shelter by only two arms 16 connected to the respective centering.

As mentioned above, in correspondence of the front end of the top-body, where the end of the tarpaulin is attached in a conventional manner to the cabin shelter or to the top-body end, the device of the invention is arranged, thus preventing in this position the tarpaulin from not being correctly folded and thus falling between the centering and the cabin shelter.

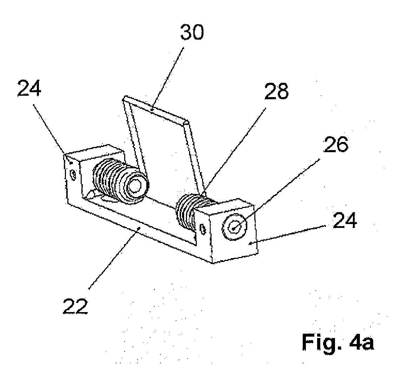

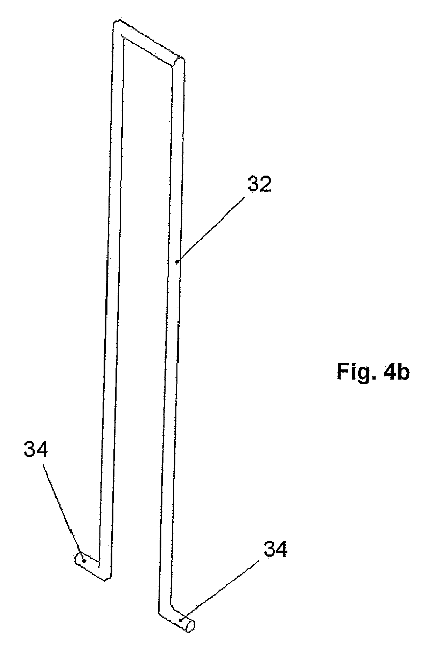

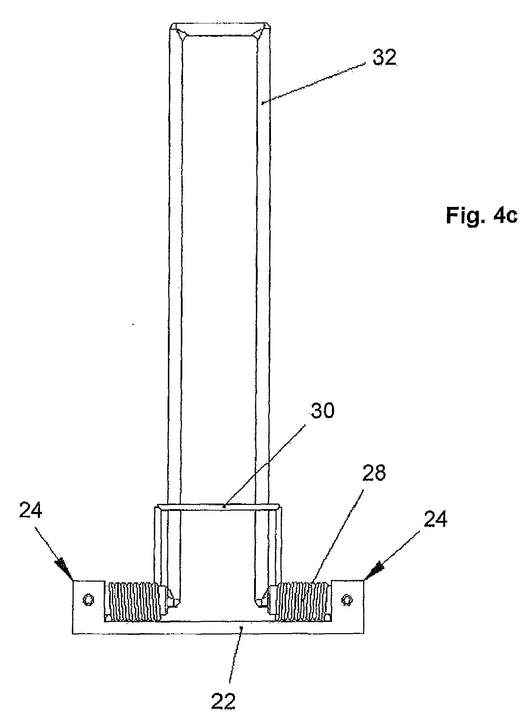

Taking into account now the Figures 4a and 4b, the device consists of a U-shaped bracket 22: inside the two wings 24 there are fixed, through bushes 26, the ends of a torsion spring 28, having an active element in the form of a U-frame 30.

The device also comprises a supporting element 32 that is in the form of a second U-shaped frame, whose lower ends are folded to form pins 34 insertable in the bushes 26, coaxially with the torsion spring.

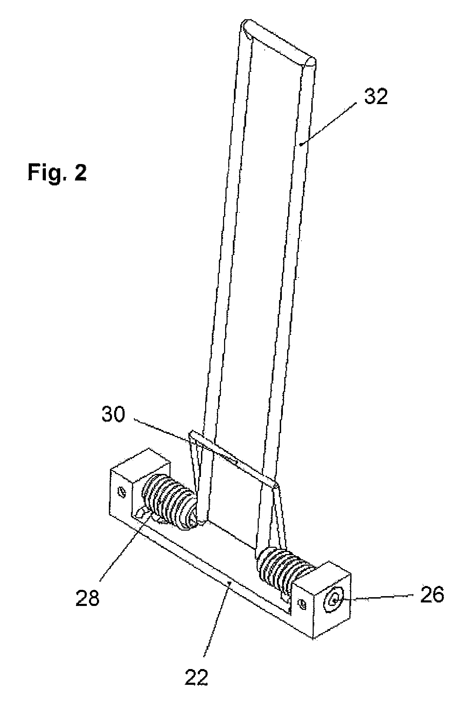

The second frame 32 is positioned so as to be subject to the action of the active element 30 of the torsion spring in the sense that the spring urges the second frame toward the vertically oriented condition relative to the bracket 22, i.e. toward the condition illustrated in Fig. 2.

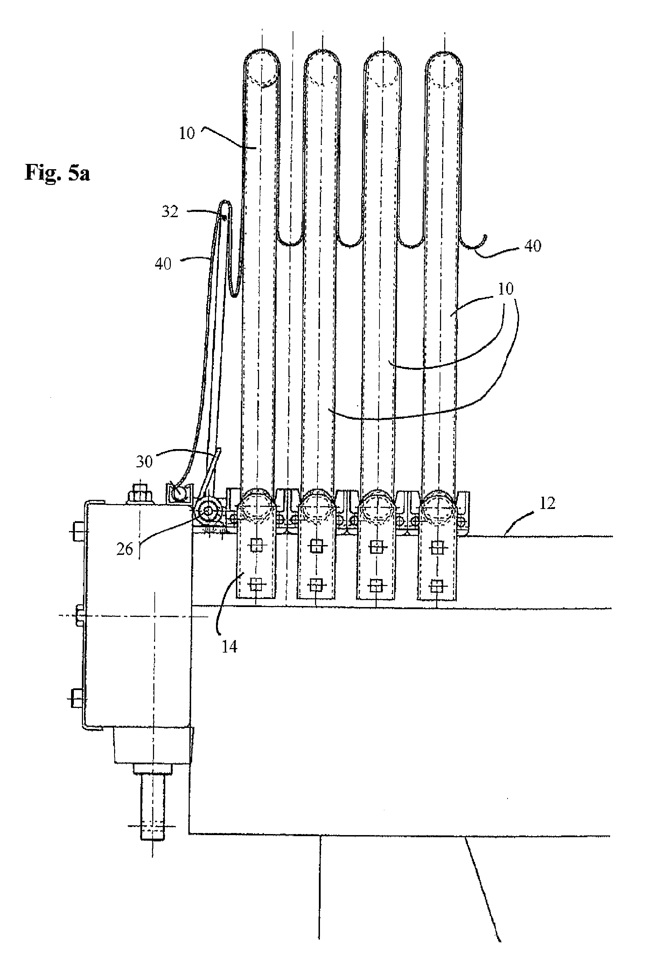

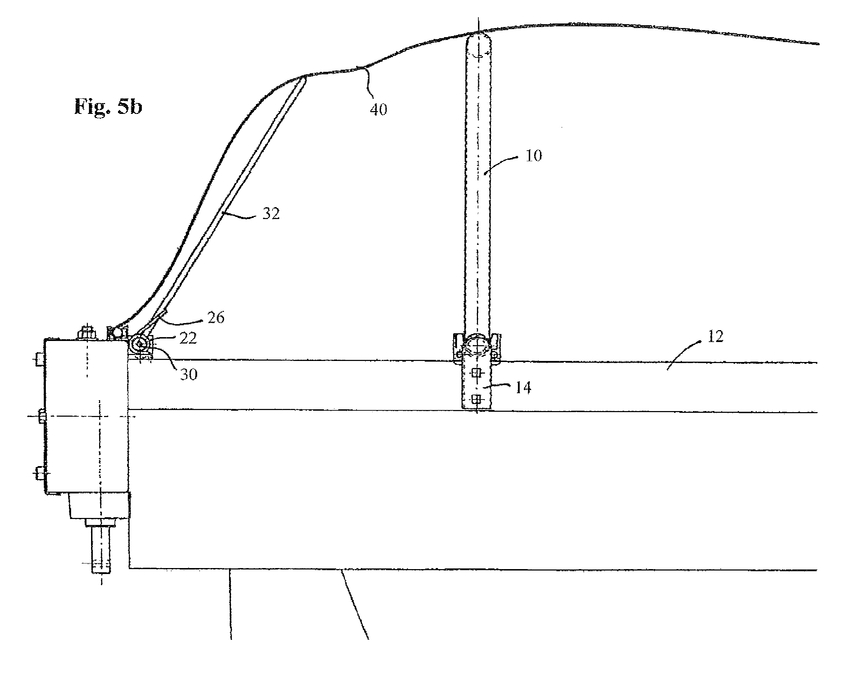

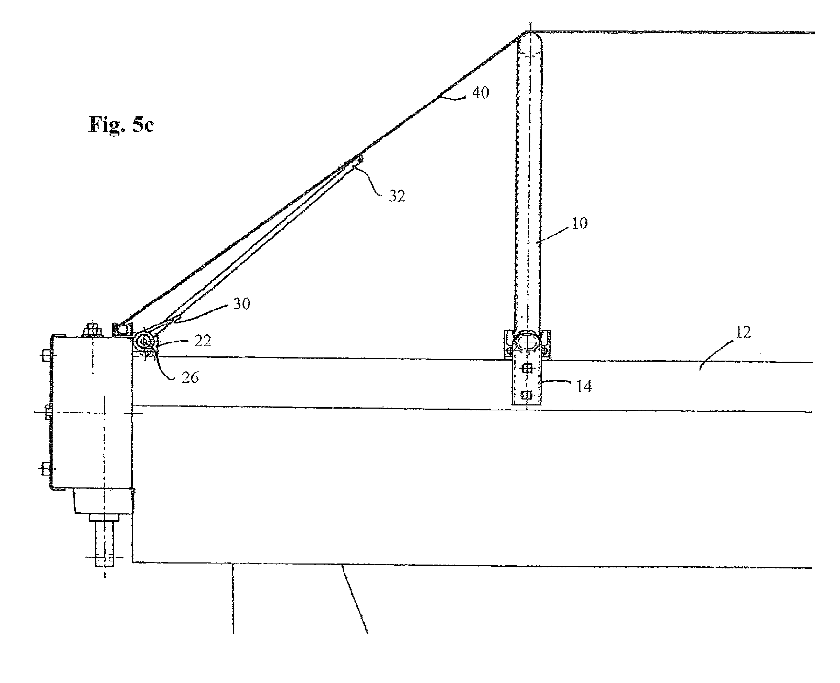

As shown in figure 5, the device is located entirely below the tarpaulin so that when the tarpaulin is packed, i.e. in the condition of part C in Fig. 1, the upper end of the second frame 32 that rises vertically (i.e. the device is in the condition shown in Fig. 2) supports from below the tarpaulin thereby avoiding it from falling into the space between the last centering and the cabin shelter.

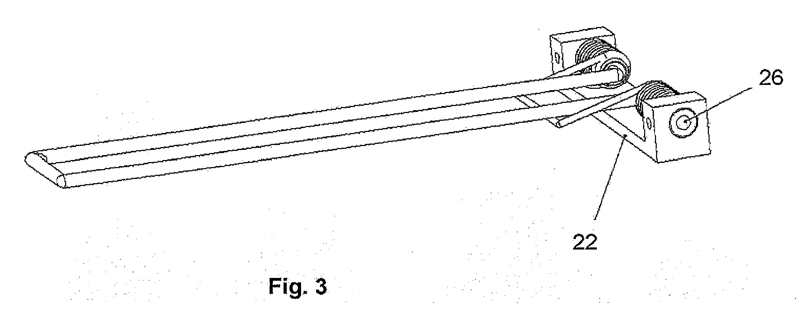

When the tarpaulin (indicated by reference 40 in Figures 5) is instead brought into the position previously defined as the open position, namely that in which the tarpaulin covers the entire top-body (condition A in Fig. 1), the force directed downwards exerted by the tarpaulin overcomes the elastic force of the torsion spring 28 and rotates the second frame to the position in which it does not interfere with the condition of complete extension of the tarpaulin (shown in Fig. 5c and Fig. 3).

Indeed Fig. 3 shows the device in a completely horizontal condition, although in reality the second frame 32 will assume a tilted position, substantially corresponding to that taken by the arms 16 in Part A of Fig. 1.

In the manufacturing of the device according to the invention it is considered to make the second frame adjustable in height as compared to the connection to the bracket 22. To this end, the second frame can be made so that each side of the U has a telescopic structure formed by two concentric tubes that can slide one inside the other, taking the appropriate position for every application and thus for every truck, after which the locking of the two telescoping tubes to each other can be accomplished.

The torsion spring 28 may be likewise adjustable both as regards the contrast force to the rotation of the second frame from the position of fig. 2 to that of fig. 3, and as regards the height and horizontal extension of the first U-shaped element 30.

It is apparent that the device according to the invention will be mounted in pairs on either side of the truck's top-body, but it is not to be excluded that a larger number thereof might be mounted in the width of the top-body, in order to make more secure the supporting action during the folding of the tarpaulin.

Alternatively, it is possible and to carry out a device of the present invention in a form equivalent to a centering that extends for the entire width of the top-body, in which case instead of one torsion spring there may be two torsion springs each acting on one side of the above said centering.

The advantages of the present invention are obvious from the description above.

Among these, it is to highlight how the invention's device solves the technical problem without the need for operating devices and dedicated mechanisms, being sufficient the simple translation of the tarpaulin between its two positions, working and packed respectively, to cause the operation of device.

Equally important is the fact that the invention's device must not be fixed at the covering tarpaulin, thereby aggravations in the manufacturing process, risks of damage or breakage of the tarpaulin or jamming of the device do not occur

Among the changes and variations conceptually equivalent to the present invention, variants that exploit the concept of providing temporary support to the tarpaulin in the packing phase at the tarpaulin section adjacent to the cabin shelter or to the top-body end, one can mention that in place of the torsion spring the displacement of the second frame between the position of fig. 5a and that of fig. 5c is achieved by means of mechanical control means such as a train of bevel gears arranged at 90° between each other and integral on one side with an axis orthogonal to the sides of the U of said second frame and on the other side to a shaft protruding outside the top-body at the cabin shelter so that, by rotating the above shaft said second frame is rotated from the position substantially horizontal or however non-operational, corresponding to the tarpaulin fully open for forming the cover of the whole top-body, to the substantially vertical operational position in which it supports the end of the tarpaulin at the juncture to the cabin shelter or to the top-body when the tarpaulin is completely packed.

As a further variant of such control means there are contemplated oleodinarnic or pneumatic piston means, driven by a compressor operated by the truck engine, said piston being capable of protruding from the top-body surface engaging a counterpart integral with the second frame so as to rotate said second frame about an axis perpendicular to the sides of the U of said second frame.

## Claims

1. Device for supporting the covering tarpaulin for top-bodies, especially top-bodies of trucks, allowing the phases of opening and closing the tarpaulin, **characterized by** comprising, at the tarpaulin end near the truck cabin, a tarpaulin supporting element, fixed at said top-body end and cooperating with the inner surface of the tarpaulin, and means for urging said supporting element toward the operating position in which it rises substantially vertically from its said fixing point, temporarily supporting the tarpaulin at that end.

2. Device according to claim 1, **characterized in that** said supporting element consists of a U-shaped tubular element, in which the transverse side of the U is in contact with said inner surface of the tarpaulin, while the ends of the sides of the U are swivelly anchored to a mounting bracket, preferably anchored to the cabin shelter or to the top-body front end, and said means for urging said supporting element toward said condition in which it rises vertically consist of spring means.

3. Device according to claim 2, **characterized in that** said spring means consist of a torsion spring, fixed at said bracket too and comprising a U-shaped frame cooperating with the sides of said U-shaped element.

4. Device according to claim 2, **characterized in that** the tubular U-shaped element forming said supporting element comprises telescopically coupled elements which allow to adjust both the height of said U-shaped element according to the width of space separating the last transverse supporting centering of the tarpaulin from the tarpaulin front end.

5. Device according to claim 4, **characterized in that** said U-shaped frame of said torsion spring comprises telescopically coupled elements which allow to adjust the height of said U-shaped element.

6. Device according to claim 1, **characterized in that** said means for urging said supporting element toward the operating position consist of mechanical control means such as a train of bevel gears arranged at 90 degrees between each other integral on one side with an axis orthogonal to said second frame and on the other side to a shaft projecting outside the top-body at the cabin shelter so that, by rotating said shaft, said second frame is rotated from the substantially horizontal or however non-operating position, corresponding to the tarpaulin being fully open to form the cover of the whole top-body, to the substantially vertical operating position in which it supports the tarpaulin end at the juncture to the cabin shelter or to the top-body when the tarpaulin is completely packed.

7. Device according to claim 1, **characterized in that** said means for urging said supporting element towards the operating position consist of oleodinarnic or pneumatic piston means, driven by a compressor operated by the truck engine, said piston being capable of protruding from the surface of the top-body engaging a counterpart integral with said second frame so as to make said second frame rotate about an axis perpendicular to the sides of the U of said second frame.
